# EUROPÄISCHE PATENTANMELDUNG

(11) **EP 4 451 234 A1**
(43) Veröffentlichungstag der Anmeldung: **23.10.2024**
(21) Anmeldenummer: 24157299.9
(22) Anmeldetag: 13.02.2024
(51) Int. Cl.: G06V 20/52, G06V 20/56, G06V 10/764, A01D 41/127, A01D 43/08

(54) **LANDWIRTSCHAFTLICHE ERNTEMASCHINE**

(30) Priorität: 19.04.2023 DE 102023109862
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Klein-Helmkamp, Marwin, 49565 Bramsche (DE)
(74) Vertreter: CLAAS Gruppe

(57) **Zusammenfassung**

Die vorliegende Erfindung betrifft eine landwirtschaftliche Erntemaschine (1) mit mindestens einem Arbeitsaggregat (6) zum Abernten eines Feldbestandes (4) und/oder zur Verarbeitung von Erntegut (5) des Feldbestandes (4). Die Erntemaschine (1) weist eine Kontrollanordnung (14) auf, die ein optisches Messsystem (15) zur Aufnahme von Bilddaten von sich in einem Sichtbereich (17) des optischen Messsystems (15) befindendem Erntegut (5) eines Erntegutstroms (E) aufweist. Das optische Messsystem (15) ist dazu eingerichtet ist, in einer Bilderkennungsroutine mittels eines ersten Bilderkennungsalgorithmus anhand der Bilddaten mindestens einen Erntegutparameter des Ernteguts (5) zu ermitteln. Die Erntemaschine (1) ist dadurch gekennzeichnet, dass die Kontrollanordnung (14) dazu eingerichtet ist, in der Bilderkennungsroutine mittels eines zweiten Bilderkennungsalgorithmus neben dem mindestens einen Erntegutparameter anhand der Bilddaten einen Bedeckungsgrad des Sichtbereichs (17) mit Erntegut (5) zu ermitteln, den Bedeckungsgrad mit einem vorgebbaren Schwellwert für den Bedeckungsgrad zu vergleichen und bei einem Unterschreiten des Schwellwerts den ermittelten Erntegutparameter als ungeeignet zu klassifizieren.

## Beschreibung

Die vorliegende Erfindung betrifft eine landwirtschaftliche Erntemaschine, insbesondere einen Feldhäcksler, mit mindestens einem Arbeitsaggregat zum Abernten eines Feldbestandes und/oder zur Verarbeitung von Erntegut des Feldbestandes gemäß dem Oberbegriff des unabhängigen Patentanspruchs 1.

Der Einsatz von optischen Messsystemen zur Detektion von Erntegutströmen, die eine landwirtschaftliche Erntemaschine durchlaufen ist bekannt. Die EP 2 098 109 A1 offenbart beispielsweise eine landwirtschaftliche Erntemaschine in Gestalt eines Feldhäckslers, in welcher mittels eines Kamerasystems Bilder eines Erntegutstroms während des Betriebs des Feldhäckslers aufgenommen werden, anhand derer anschließend eine Teilchengröße von in den Bildern dargestellten Partikeln ermittelt wird. Neben der Teilchengröße als Erntegutparameter können auch beispielsweise eine Kornaufbereitung oder ein Trockenmassegehalt als Erntegutparameter über das Kamerasystem ermittelt werden.

Solche kamerabasiert-ermittelten Erntegutparameter werden im Betrieb der landwirtschaftlichen Erntemaschine, also während der Ernte auf dem Feld, oftmals unmittelbar zur Einstellung der einzelnen Arbeitsaggregate, die der Ernte des Feldbestands und/oder der Verarbeitung von Erntegut des Feldbestandes dienen, verwendet. Eine derartige Einstellung erfolgt in der Regel automatisiert, wobei die zyklisch ermittelten Erntegutparameter von einer Steuereinheit zur Einstellung von Prozessparametern der Erntemaschine, insbesondere besagter Arbeitsaggregate, verwendet werden.

Das zur Ermittlung der Erntegutparameter verwendete optische Messsystem erfasst Bilder des Erntegutstroms dabei unabhängig davon, ob der Erntegutdurchsatz gering ist, beispielsweise dann, wenn die Erntemaschine in den Feldbestand einfährt, oder hoch ist, beispielsweise dann, wenn sich die Erntemaschine im Feldbestand bewegt. Bei einem geringen Erntegutdurchsatz bzw. dann, wenn der Erntegutdurchsatz ansteigt oder aber abfällt, besteht allerdings die Gefahr, dass anhand der mittels des optischen Messsystems erfassten Bilder des Erntegutstroms Erntegutparameter ermittelt werden, welche Extremwerte darstellen und somit die Realität nicht richtig abbilden. Da auch solche Erntegutparameter von einer Steuereinheit für die automatisierte Einstellung von Prozessparametern der landwirtschaftlichen Erntemaschine bzw. deren Arbeitsaggregate verwendet werden, werden die Erntemaschine bzw. die Arbeitsaggregate demnach nicht ideal eingestellt, wodurch unter Umständen hohe Erntegutverluste auftreten können und somit ein erheblicher betriebswirtschaftlicher Schaden entstehen kann.

Ursächlich für die Ermittlung von solchen Extremwerten bei einem geringen oder steigenden bzw. fallenden Erntegutdurchsatz ist eine unvollständige Bedeckung des Sichtbereichs des optischen Messsystems. Eine unvollständige Bedeckung des Sichtbereichs kann bei einem geringen oder steigenden bzw. fallenden Erntegutdurchsatz beispielsweise auf einen zu geringen Anpressdruck des Ernteguts an das Sichtfenster im Sichtbereich des optischen Messsystems und einem daraus resultierenden veränderten Abstand des Ernteguts zum optischen Messsystem zurückzuführen sein, was zu einer ungünstigen Brennweite des Objektivs und somit einer Unschärfe in den aufgenommenen Bildern vom Erntegutstrom führt. Eine andere Ursache kann in einer geringeren Belichtung des Ernteguts durch Transmission und somit einer spektralen Veränderung des Ernteguts aus Sicht des optischen Messsystems gesehen werden.

Ausgehend hiervon ist es demnach die Aufgabe der vorliegenden Erfindung die beschriebenen Nachteile des Standes der Technik auszuräumen und insbesondere eine landwirtschaftliche Erntemaschine derart auszugestalten und weiterzubilden, dass anhand von Bilddaten ermittelte Erntegutparameter, die fehlerbehaftet sind, identifiziert werden und bei einer Einstellung der landwirtschaftlichen Erntemaschine bzw. der Arbeitsaggregate der landwirtschaftlichen Erntemaschine unberücksichtigt bleiben können.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Erntemaschine Gegenstand der entsprechenden abhängigen Patentansprüche 2 bis 12 sind.

Demnach betrifft die vorliegende Erfindung eine landwirtschaftliche Erntemaschine mit mindestens einem Arbeitsaggregat zum Abernten eines Feldbestandes und/oder zur Verarbeitung von Erntegut des Feldbestandes. Das Erntegut wird im Betrieb der landwirtschaftlichen Erntemaschine in einem Erntegutstrom entlang eines Ernteguttransportweges durch die landwirtschaftliche Erntemaschine transportiert. Die landwirtschaftliche Erntemaschine weist eine Kontrollanordnung auf, die ein an dem Ernteguttransportweg angeordnetes optisches Messsystem aufweist. Das optische Messsystem weist mindestens eine Kamera zur Aufnahme von Bilddaten von sich in einem Sichtbereich des optischen Messsystems befindendem Erntegut des Erntegutstroms auf. Das optische Messsystem ist dazu eingerichtet, in einer Messroutine mittels der Kamera Bilddaten des sich im Sichtbereich befindenden Ernteguts zu erfassen. Die Kontrollanordnung ist dazu eingerichtet, in einer Bilderkennungsroutine mittels eines ersten Bilderkennungsalgorithmus anhand der Bilddaten mindestens einen Erntegutparameter des Ernteguts zu ermitteln. Die landwirtschaftliche Erntemaschine ist dadurch gekennzeichnet, dass die Kontrollanordnung dazu eingerichtet ist, in der Bilderkennungsroutine mittels eines zweiten Bilderkennungsalgorithmus neben dem mindestens einen Erntegutparameter anhand der Bilddaten einen Bedeckungsgrad des Sichtbereichs mit Erntegut zu ermitteln, den ermittelten Bedeckungsgrad mit einem vorgebbaren Schwellwert für den Bedeckungsgrad zu vergleichen und bei einem Unterschreiten des definierten Schwellwerts den mindestens einen ermittelten Erntegutparameter als ungeeignet zu klassifizieren.

Bei der landwirtschaftlichen Erntemaschine handelt es sich insbesondere um einen Feldhäcksler.

Die Verarbeitung der Bilddaten durch die Kontrollanordnung in der Bilderkennungsroutine anhand eines zweiten Bilderkennungsalgorithmus zur Bestimmung des Bedeckungsgrades des Sichtbereichs mit Erntegut, der anschließende Schwellwertvergleich sowie die Klassifikation des zuvor bestimmten Erntegutparameters erlaubt potentiell fehlerbehaftete Erntegutparameter zu identifizieren und als solche kenntlich zu machen, sodass diese von einer Nutzung für eventuelle Einstellungen an der landwirtschaftlichen Erntemaschine während des Betriebs ausgeschlossen werden können.

Die Bestimmung des Bedeckungsgrades des Sichtbereichs mit Erntegut stellt dabei eine verlässliche Größe dar, die in aller Regel im Wesentlichen mit dem Erntegutdurchsatz in der landwirtschaftlichen Erntemaschine übereinstimmt. Anhand eines geringen Bedeckungsgrades kann somit auf einen geringen Erntegutdurchsatz geschlossen werden, bei welchem anhand von Bilddaten ermittelte Erntegutparameter oftmals Extremwerte annehmen, die den wirklichen vorliegenden Bedingungen nicht gerecht werden, die Realität somit nicht richtig abbilden, und für eine Einstellung der landwirtschaftlichen Erntemaschine im Betrieb im Hinblick auf das Ernteergebnis nachteilig, im Wesentlichen gänzlich ungeeignet bzw. unbrauchbar, sind. Die Bestimmung des Bedeckungsgrades des Sichtbereichs und der Schwellwertvergleich zur Klassifikation des zuvor bestimmten Erntegutparameters stellt demnach eine besonders unkomplizierte, mit geringem Rechenaufwand verbundene und somit besonders effiziente Art und Weise dar fehlerbehaftete Erntegutparameter von einer Nutzung zum Zwecke der Einstellung der landwirtschaftlichen Erntemaschine, insbesondere im Falle einer automatisierten Einstellung, auszuschließen.

Einhergehend mit der Klassifikation des mindestens einen Erntegutparameters als ungeeignet kann die Kenntlichmachung desselben durch die Kontrollanordnung beispielsweise in der Art erfolgen, dass die Kontrollanordnung den als ungeeignet klassifizierten Erntegutparameter mit einem "Flag" versieht oder diesem Erntegutparameter einen Fehlerwert, beispielsweise von "-1", zuweist.

Gemäß einer vorteilhaften Weiterbildung der Erfindung ist vorgesehen, dass die Kontrollanordnung zur Ermittlung des Bedeckungsgrades des Sichtbereichs mit Erntegut dazu eingerichtet ist, in der Bilderkennungsroutine mittels des zweiten Bilderkennungsalgorithmus eine Gesamtmenge an Bildpixeln in den Bilddaten zu bestimmen, auf denen Erntegut zu sehen ist, und diese Gesamtmenge an Bildpixeln mit einer Gesamtmenge an Bildpixeln, die durch den Sichtbereich definiert ist, ins Verhältnis zu setzen. Die Gesamtmenge an Bildpixeln, die durch den Sichtbereich definiert ist, ist durch die Kontrollanordnung bestimmbar oder abrufbar hinterlegt.

Die Vorgehensweise über die Bestimmung der Gesamtmengen an Bildpixeln, einerseits von Bildpixeln, auf denen Erntegut zu sehen ist, und andererseits von Bildpixeln, die durch den Sichtbereich des optischen Messsystems definiert sind, kann der Bedeckungsgrad des Sichtbereichs mit Erntegut eindeutig bestimmt werden. Eine kompliziertere und rechenaufwändigere Bestimmung von geometrischen Merkmalen der Bildinhalte ist somit für die Bestimmung des Bedeckungsgrades des Sichtbereichs mit Erntegut nicht zwangsläufig erforderlich. Das Zählen von Bildpixeln, auf denen Erntegut zu sehen ist, das Zusammenfassen all dieser Bildpixel zu einer Gesamtmenge und das anschließende ins Verhältnis setzen dieser Gesamtmenge von Bildpixeln mit der fixen Menge an Bildpixeln, die durch den Sichtbereich definiert ist, stellt einen robusten und gleichermaßen zuverlässigen Ansatz zur Bestimmung des Bedeckungsgrades und somit für die Klassifikation des ermittelten Erntegutparameters dar.

Gemäß einer vorteilhaften Weiterbildung der Erfindung ist vorgesehen, dass der zweite Bilderkennungsalgorithmus auf künstlicher Intelligenz basiert.

Vorzugsweise ist vorgesehen, dass der zweite Bilderkennungsalgorithmus ein trainiertes neuronales Netzwerk nutzt, besonders bevorzugt ein Artificial Neural Network (ANN) oder ein Convolutional Neural Network (CNN).

Durch die Verwendung von künstlicher Intelligenz, insbesondere eines trainierten neuronalen Netzwerks, kann die Genauigkeit bei der Bestimmung des Bedeckungsgrades des Sichtbereichs mit Erntegut und somit die Genauigkeit der Klassifikation des mindestens einen Erntegutparameters gegenüber klassischen Methoden der Bildverarbeitung, die ebenfalls für die Bestimmung des Bedeckungsgrades genutzt werden können, deutlich gesteigert werden. Die Verwendung einer künstlichen Intelligenz kann insbesondere für spezielle Erntegutsorten von Vorteil sein, vorzugsweise für heterogene Erntegutsorten, wie Maishäckselgut.

Gemäß einer vorteilhaften Weiterbildung der Erfindung ist vorgesehen, dass die Kontrollanordnung dazu eingerichtet ist, eine Segmentierung der Bilddaten vorzunehmen, mittels der in den Bilddaten enthaltene Inhalte in zusammenhängende Segmente unterteilt werden.

Vorzugsweise ist vorgesehen, dass die Kontrollanordnung dazu eingerichtet ist, die Bilddaten semantisch zu segmentieren und zusammenhängende Segmente entweder der Klasse "Erntegut" oder der Klasse "kein Erntegut" zuzuordnen.

Weiter vorzugsweise ist vorgesehen, die Kontrollanordnung dazu eingerichtet ist, eine Gesamtmenge an Bildpixeln zu bestimmen, die den Segmenten der Klasse "Erntegut" zugeordnet ist, wobei die Gesamtmenge an Bildpixeln, die den Segmenten der Klasse "Erntegut" zugeordnet ist, der Gesamtmenge an Bildpixeln in den Bilddaten entspricht, auf denen Erntegut zu sehen ist.

Die Bestimmung der Gesamtmenge an Bildpixeln, auf denen Erntegut zu sehen ist, über eine Segmentierung des oder der mittels der Kamera erzeugten Bildes, Bilder bzw. Bilddaten, insbesondere über eine semantische Segmentierung mittels künstlicher Intelligenz, vorzugsweise eines künstlichen neuronalen Netzwerks, welches beispielsweise auf einer UNET-Architektur basiert, wobei die bei der Segmentierung erzeugten Segmente lediglich zwei Klassen zu zugeordnet werden müssen, demnach binär klassifiziert werden, ist ein hinsichtlich der erforderlichen Rechenleistung vorteilhaftes Vorgehen, das für eine hinreichend genaue Ermittlung des Bedeckungsgrades und somit eine zuverlässige und robuste Klassifikation des mindestens einen Erntegutparameters ausreichend ist.

Gemäß einer vorteilhaften Weiterbildung der Erfindung ist vorgesehen, dass die Kontrollanordnung dazu eingerichtet ist, basierend auf dem mindestens einen ermittelten Erntegutparameter mindestens einen Prozessparameter der landwirtschaftlichen Erntemaschine, insbesondere mindestens eines Arbeitsaggregats der landwirtschaftlichen Erntemaschine, einzustellen, wobei die Kontrollanordnung dazu eingerichtet ist, einen als ungeeignet klassifizierten Erntegutparameter bei der Einstellung des mindestens einen Prozessparameters zu vernachlässigen.

Vorzugsweise ist dabei vorgesehen, dass die Kontrollanordnung dazu eingerichtet ist, basierend auf dem mindestens einen ermittelten Erntegutparameter mindestens einen Prozessparameter der landwirtschaftlichen Erntemaschine, insbesondere mindestens eines Arbeitsaggregats der landwirtschaftlichen Erntemaschine, automatisiert einzustellen.

Hierdurch wird sichergestellt, dass die Einstellung der landwirtschaftlichen Erntemaschine bzw. Einstellung der Arbeitsaggregate der landwirtschaftlichen Erntemaschine im Betrieb auf dem Feld nur anhand von validen Erntegutparametern erfolgt. Erntegutparameter, die hingegen bei einem geringen Bedeckungsgrad des Sichtbereichs, demnach in aller Regel bei einem geringen Erntegutdurchsatz, detektiert wurden, bleiben bei der Einstellung der landwirtschaftlichen Erntemaschine bzw. deren Arbeitsaggregate unberücksichtigt. Hierdurch wird verhindert, dass die Arbeitsaggregate basierend auf Extremwerten, die nicht den real vorliegenden Bedingungen entsprechen, angesteuert werden und somit die Ernte bzw. das Ernteergebnis nachteilig beeinflusst wird.

Gemäß einer vorteilhaften Weiterbildung der Erfindung ist vorgesehen, dass die landwirtschaftliche Erntemaschine eine Sensoreinrichtung zur Bestimmung eines Erntegutdurchsatzes aufweist, wobei die Sensoreinrichtung mit der Kontrollanordnung in datenübertragender Weise in Verbindung steht, wobei die Kontrollanordnung dazu eingerichtet ist, einen bestimmten Erntegutdurchsatz mit dem bestimmten Bedeckungsgrad zu korrelieren und die Klassifikation des mindestens einen Erntegutparameters anhand des Erntegutdurchsatzes zu überprüfen.

Durch die Korrelation von ermitteltem Erntegutdurchsatz und ermittelten Bedeckungsgrad wird gewissermaßen ein Sicherheitsmechanismus für die Klassifikation des mindestens einen Erntegutparameters im Sinne eines Fail-Safe-Prinzips geschaffen. Wird beispielsweise ein Bedeckungsgrad des Sichtbereichs durch die Kontrollanordnung ermittelt, der oberhalb des vorgegebenen Schwellwerts für den Bedeckungsgrad liegt, der Erntegutparameter somit von der Kontrollanordnung als valide klassifiziert wird, kann der Erntegutdurchsatz als zusätzlicher Sicherheitsmechanismus herangezogen werden, welcher in einem solchen Fall der Theorie nach hoch sein sollte. Sollte der mittels der Sensoreinrichtung gemessene Erntegutdurchsatz in diesem Fall hingegen niedrig sein, so könnte der Erntegutparameter trotz des positiven Ergebnisses einer Klassifikation über den Bedeckungsgrad trotz alledem anhand des ermittelten Erntegutdurchsatzes als ungeeignet klassifiziert werden. Hierdurch wird eine noch verlässlichere und robustere Klassifikation der Erntegutparameter erzielt und somit eine verbesserte Einstellung der Prozessparameter der landwirtschaftlichen Erntemaschine gewährleistet.

Gemäß einer vorteilhaften Weiterbildung der Erfindung ist vorgesehen, dass die mindestens eine Kamera eine Multispektralkamera, eine Hyperspektralkamera, eine sichtbares Licht aufnehmende Kamera und/oder eine infrarotes Licht aufnehmende Kamera ist.

Je nach Position des optischen Messsystems entlang des Ernteguttransportweges und/oder abhängig von vorliegenden Randbedingungen im Betrieb der landwirtschaftlichen Erntemaschine, beispielsweise der Art des zu ernteten Feldbestandes bzw. des zu verarbeitenden Ernteguts, Witterungsbedingungen oder dergleichen, können eine oder mehrere für die Erfassung der Bilddaten, auf denen Erntegut des Erntegutstroms durch die landwirtschaftliche Erntemaschine durchsatzabhängig sichtbar wird, ideale Kameras Anwendung finden.

Gemäß einer vorteilhaften Weiterbildung der Erfindung ist vorgesehen, dass die mindestens eine Kamera an einer Überladeeinrichtung der landwirtschaftlichen Erntemaschine angeordnet ist.

Vorzugsweise ist vorgesehen, dass die mindestens eine Kamera an einer als Auswurfkrümmer ausgeführten Überladeeinrichtung des Feldhäckslers angeordnet ist.

Die Anordnung der mindestens einen Kamera des optischen Messsystems an der Überladeeinrichtung der landwirtschaftlichen Erntemaschine sorgt dafür, dass das Erntegut, welches sich im Sichtbereich des optischen Messsystems zum Zeitpunkt der Erfassung der Bilddaten befindet, im Wesentlichen vollständig durch die verschiedenen Arbeitsaggregate der landwirtschaftlichen Erntemaschine verarbeitet worden ist.

Gemäß einer vorteilhaften Weiterbildung der Erfindung ist vorgesehen, dass die Kontrollanordnung mit einer Eingabeeinheit in datenübertragender Weise in Verbindung steht, mittels welcher der Schwellwert für den Bedeckungsgrad vorgebbar ist.

Gemäß einer vorteilhaften Weiterbildung der Erfindung ist vorgesehen, dass die Kontrollanordnung mit einer Anzeigeeinheit in datenübertragender Weise in Verbindung steht, mittels welcher zumindest die Klassifikation des mindestens einen Erntegutparameters visualisierbar ist.

Die Verbindung der Kontrollanordnung mit einer Eingabeeinheit und/oder eine Anzeigeeinheit, die einer übergeordneten Einrichtung, beispielsweise einer Benutzerschnittstelle ("user interface" (UI)) in einer Fahrerkabine der landwirtschaftlichen Erntemaschine und/oder eines mobilen Endgeräts, insbesondere eines Smartphones oder eines Tablets, zugeordnet sein können, schafft eine Möglichkeit für den Bediener einerseits den oder die Schwellwerte für den Bedeckungsgrad des Sichtbereichs mit Erntegut vorzugeben zu können und andererseits relevante Informationen zumindest im Hinblick auf die Klassifikation des oder der anhand der Bilddaten bestimmten Erntegutparameter visualisiert zu bekommen.

Die vorliegende Erfindung wird nachstehend anhand der in den Figuren abgebildeten Ausführungsformen näher beschrieben.

Es zeigen:

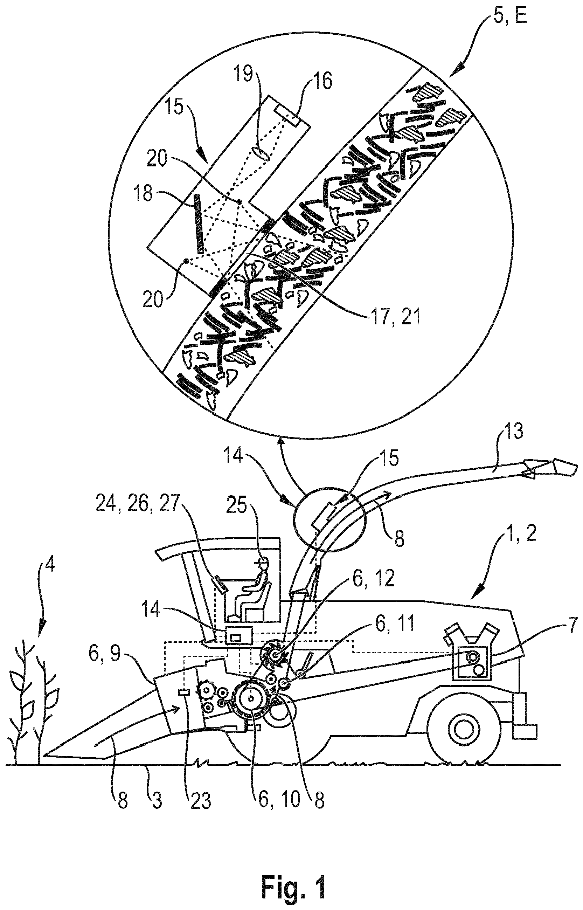

- FIG. 1: eine schematische und exemplarische Ansicht einer erfindungsgemäßen landwirtschaftlichen Erntemaschine in Gestalt eines Feldhäckslers mit einer Kontrollanordnung, wobei schematisch die Aufnahme von Erntegut eines Erntegutstroms mittels eines optischen Messsystems der Kontrollanordnung gezeigt ist;

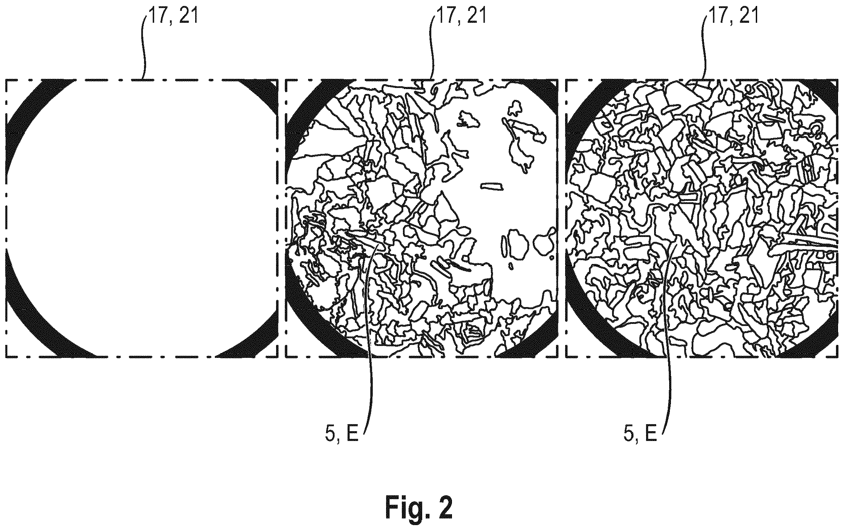

- FIG. 2: eine schematische und exemplarische Visualisierung von mittels des optischen Messsystems aufgenommen Bilddaten, wobei ein Bedeckungsgrad eines Sichtbereichs des optischen Messsystems mit Erntegut variiert;

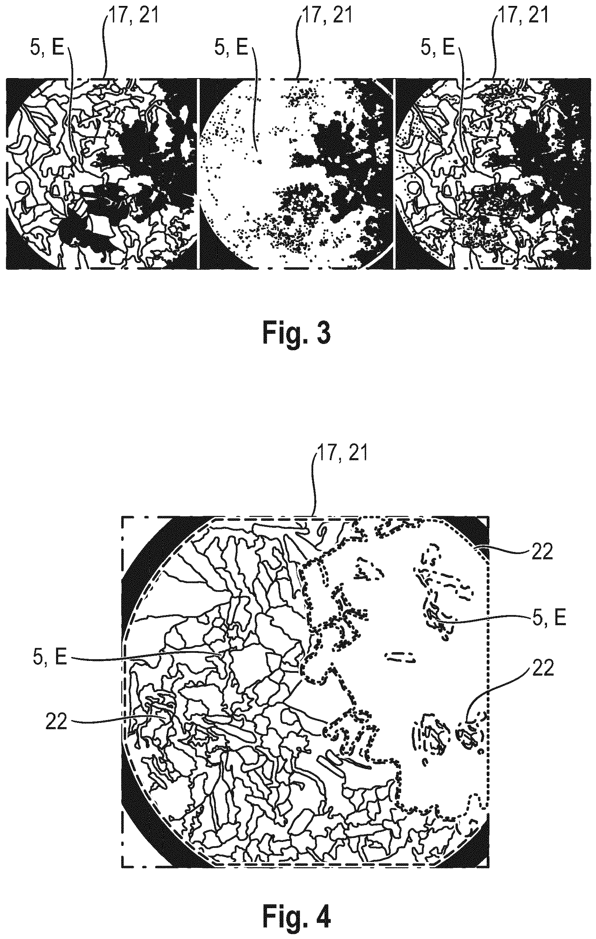

- FIG. 3: eine schematische und exemplarische Visualisierung einer mittels der Kontrollanordnung durchgeführten Bildverarbeitung von mittels des optischen Messsystems aufgenommen Bilddaten anhand einer klassischen Bildverarbeitung zur Ermittlung des Bedeckungsgrades des Sichtbereichs des optischen Messsystems mit Erntegut; und
- FIG. 4: eine schematische und exemplarische Visualisierung einer mittels der Kontrollanordnung durchgeführten Bildverarbeitung von mittels des optischen Messsystems aufgenommen Bilddaten anhand einer semantischen Bildsegmentierung zur Ermittlung des Bedeckungsgrades des Sichtbereichs des optischen Messsystems mit Erntegut.

FIG. 1 zeigt eine schematische und exemplarische Darstellung einer erfindungsgemä-ßen landwirtschaftlichen Erntemaschine 1 in Gestalt eines Feldhäckslers 2 während eines Erntevorgangs auf einem Feld 3, auf dem ein zu erntender Feldbestand 4 mit Erntegut 5 vorhanden ist. Die Erfindung wird nachfolgend am Beispiel des Feldhäckslers 2 im Detail beschrieben.

Die Karosserie des Feldhäckslers 2 ist im vorderen Bereich, unterhalb einer Fahrerkabine, offen dargestellt, wodurch Erntegut 5 aufnehmende und/oder verarbeitende Arbeitsaggregate 6 des Feldhäckslers 2 sichtbar sind, die mit einem dem Antrieb dienenden Arbeitsaggregat, in Gestalt eines Antriebsmotors 7, verbunden sind. Das Erntegut 5 wird mittels der verschiedenen Arbeitsaggregate 6 im Betrieb des Feldhäckslers 2 geerntet und anschließend im Feldhäcksler 2 verarbeitet, wobei das Erntegut 5 im Betrieb des Feldhäckslers 2 in einem Erntegutstrom E entlang eines Ernteguttransportweges 8 durch den Feldhäcksler 2 transportiert wird. Der Ernteguttransportweg 8 ist in FIG. 1 lediglich andeutungsweise gezeigt. Er verläuft auf übliche Art und Weise durch den Feldhäcksler 2. Der Erntegutstrom E kann sich im Feldhäcksler 2 in einen Haupterntegutstrom und kleinere Teilerntegutströme unterteilen.

Ein Erntegut 5 aufnehmendes Arbeitsaggregat 6 ist beispielsweise ein sogenanntes an den Feldhäcksler 2 adaptiertes Vorsatzgerät 9, beispielsweise ein Maisgebiss, mittels dem der Feldbestand 4 geerntet wird. Ein Erntegut 5 verarbeitendes Arbeitsaggregat 6 ist beispielsweise ein sogenanntes Häckselwerk 10 mit einer Messertrommel, die wiederum mit einer Vielzahl entlang ihres Umfangs verteilt angeordneten Häckselmessern versehen ist. Neben einem Häckselwerk 10 weist der Feldhäcksler 2 als Erntegut 5 verarbeitendes Arbeitsaggregat 6 einen sogenannter Corncracker 11 auf, der im Ernteguttransportweg 8 dem Häckselwerk 10 nachgeordnet ist. Dem Corncracker 11 ist weiterhin im Ernteguttransportweg 8 ein Auswurfbeschleuniger 12 nachgeordnet, der verarbeitetes Erntegut 5 einer als Auswurfkrümmer ausgeführten Überladeeinrichtung 13 des Feldhäckslers 2 zuführt, mittels dem das Erntegut 5 auf ein - in den FIGs. nicht dargestelltes - Transportfahrzeug, beispielsweise einen mit einem Traktor gekoppelten Ladewagen, übergeladen wird.

Bei dem in FIG. 1 schematisch dargestellten Feldbestand 4 handelt es sich beispielsweise um Maispflanzen. Grundsätzlich kann vorgesehen sein, dass der Feldhäcksler 2 den Feldbestand 4 aberntet. Alternativ kann der Feldhäcksler 2 jedoch auch bereits abgeernteten Feldbestand 4 lediglich vom Feld 3 aufnehmen. Das so gewonnene Erntegut 5 wird sodann von dem Feldhäcksler 2 verarbeitet, insbesondere gehäckselt. Das Erntegut 5 weist dabei naturgemäß Kornbestandteile und Nicht-Kornbestandteile auf. Im Falle von Maispflanzen handelt es sich bei den Kornbestandteilen um Maiskörner der Maispflanzen, die Nicht-Kornbestandteile sind Blätter, Stängel oder dergleichen der Maispflanze.

Der Feldhäcksler 2 weist weiterhin eine Kontrollanordnung 14 auf, die wiederum ein an dem Ernteguttransportweg 8 angeordnetes optisches Messsystem 15 aufweist. Das optische Messsystem 15 weist eine Kamera 16 zur Aufnahme von Bilddaten von sich in einem Sichtbereich 17 des optischen Messsystems 15 befindendem Erntegut 5 des Erntegutstroms E auf. Unter den Begriff "Kamera" fallen dabei beliebige optische Sensoren, die ortsaufgelöst Bilddaten aufnehmen. Der Begriff "ortsaufgelöst" bedeutet hier, dass es in den Bilddaten möglich ist, Einzelheiten des Ernteguts 5 zu unterscheiden. Die Kamera 16 ist entlang des Ernteguttransportweges 8 hinter dem Corncracker 11 angeordnet, vorzugsweise, wie in FIG. 1 dargestellt, an der als Auswurfkrümmer ausgeführten Überladeeinrichtung 13 des Feldhäckslers 2. Es kann vorgesehen sein, dass die Kamera 16 eine Multispektralkamera ist. Alternativ kann vorgesehen sein, dass die Kamera 16 eine Hyperspektralkamera ist. Weiter ist vorgesehen, dass die Kamera 16 sichtbares Licht und/oder infrarotes Licht aufnimmt. Das optische Messsystem 15 kann neben der Kamera 16 auch eine Optik aufweisen. Eine solche Optik weist einen Spiegel 18 und eine Linse 19 auf. Weiterhin kann das das optische Messsystem 15 eine Lichtquelle 20 aufweisen. Die Kamera 16 weist, wie bereits angedeutet, einen Sichtbereich 17 auf, der ein Sichtfenster 21, das einen Blick auf den Erntegutstrom E ermöglicht, einschließt bzw. beinhaltet, in dem die Kamera 16 Erntegut 5 des Erntegutstroms E detektieren kann.

Das optische Messsystem 15 erfasst in einer Messroutine mittels der Kamera 16 Bilddaten des sich im Sichtbereich 17 befindenden Ernteguts 5. Diese Messroutine wird entsprechend während des Betriebs des Feldhäckslers 2 durchgeführt. Die von der Kamera 16 erfassten Bilddaten werden von der Kontrollanordnung 14 in einer Bilderkennungsroutine mittels eines ersten Bilderkennungsalgorithmus derart verarbeitet, dass anhand der Bilddaten mindestens ein Erntegutparameter des Ernteguts 5 ermittelt wird. Hierzu kann die Kontrollanordnung 14 eine oder mehrere - in den FIGs. nicht gezeigte - Steuereinheiten und Speichereinheiten aufweisen, die mit dem optischen Messsystem 15, insbesondere der Kamera 16, in datenübertragender Weise verbunden sind. Der erste Bilderkennungsalgorithmus kann dabei ein beliebiger, für die Ermittlung eines Erntegutparameters geeigneter Bilderkennungsalgorithmus sein. Er kann Vorbereitungsschritte, Kantenerkennung, Farberkennung, komplexere Elementerkennungsalgorithmen und dergleichen umfassen. Der erste Bilderkennungsalgorithmus kann auf künstlicher Intelligenz basieren, insbesondere ein trainiertes neuronales Netzwerk nutzen.

Die Kontrollanordnung 14 kann anhand der erfassten Bilddaten in der Bildererkennungsroutine beispielsweise einen Indikator für eine Aufbereitungsqualität des Ernteguts 5 ermitteln. Hierzu werden mittels des ersten Bilderkennungsalgorithmus Bild-Regionen in den Bilddaten ermittelt, die jeweils einem Kornbestandteil zugeordnet sind. Auf Basis der Bild-Regionen werden dann geometrische Eigenschaften, beispielsweise eine Kontur eines Kornbestandteils, der jeweils zugeordneten Kornbestandteile ermitteltet. Aus den ermittelten geometrischen Eigenschaften wird dann nach einer vorbestimmten Berechnungsvorschrift der Indikator für die Aufbereitungsqualität ermittelt. Eine Aufbereitungsqualität des Ernteguts 5 stellt hier allerdings nur ein Beispiel dar und ist nur ein Erntegutparameter von verschiedenen Erntegutparametern, der mittels der Bilddaten von der Kontrollanordnung 14 in der Bilderkennungsroutine mittels des ersten Bilderkennungsalgorithmus ermittelt werden kann.

Die Kontrollanordnung 14 kann basierend auf dem mindestens einen ermittelten Erntegutparameter, beispielsweise dem Indikator für die Aufbereitungsqualität des Ernteguts 5, mindestens einen Prozessparameter des Feldhäckslers 2, insbesondere mindestens einen Prozessparameter mindestens eines Erntegut 5 aberntenden und/oder verarbeitenden Arbeitsaggregats 6 des Feldhäckslers 2, beispielsweise des Corncrackers 11, einstellen. Eine solche Einstellung eines oder mehrerer Prozessparameter des Feldhäckslers 2 erfolgt vorzugsweise automatisiert mittels der Kontrollanordnung 14. Die Einstellung des Prozessparameters kann unter Berücksichtigung eines Optimierungsziels erfolgen. Dieses Optimierungsziel kann beispielsweise einen geringeren Kraftstoffverbrauch oder dergleichen umfassen. Bei dem Corncracker 11 kann der basierend auf dem mindestens einen ermittelten Erntegutparameter einzustellende Prozessparameter beispielswiese die Drehzahl von Vorpresswalzen und/oder die Spaltbreite des Corncrackers 11 und/oder die Differenzdrehzahl des Corncrackers 11 und/oder die Drehzahl von Walzen des Corncrackers 11 sein. Die Einstellung des oder der Prozessparameter kann direkt oder indirekt über eine Ansteuerung eines anderen Arbeitsaggregats, beispielsweise des Antriebsmotors 7, bzw. einer Einstellung eines Prozessparameters eines anderen Arbeitsaggregats, beispielsweise der Drehzahl des Antriebsmotors 7, erfolgen.

Das zur Ermittlung des mindestens einen Erntegutparameter verwendete optische Messsystem 15 erfasst Bilddaten des sich im Sichtbereich 17 des optischen Messsystems 15 befindenden Ernteguts 5 des Erntegutstroms E grundsätzlich unabhängig davon, ob der Erntegutdurchsatz niedrig ist, beispielsweise dann, wenn der Feldhäcksler 2 in den Feldbestand 4 einfährt, oder hoch ist, beispielsweise dann, wenn sich der Feldhäcksler 2 im Feldbestand 4 bewegt. Bei einem geringen Erntegutdurchsatz bzw. bei einem Anstieg oder Abfall des Erntegutdurchsatzes während des Betriebs des Feldhäckslers 2 besteht die Gefahr, dass anhand der mittels des optischen Messsystems 15 erfassten Bilddaten des Ernteguts 5 Erntegutparameter ermittelt werden, welche Extremwerte darstellen und somit die Realität nicht richtig abbilden. Auch solche Erntegutparameter werden von der Kontrollanordnung 14 demnach für die Einstellung von Prozessparametern des Feldhäckslers 2 bzw. der Arbeitsaggregate 6 verwendet, wodurch der Feldhäcksler 2 bzw. einzelne oder mehrere Arbeitsaggregate 6 nicht ideal eingestellt werden.

Um diesem Umstand entgegenzuwirken ist nunmehr vorgesehen, dass die Kontrollanordnung 14 in der Bilderkennungsroutine mittels eines zweiten Bilderkennungsalgorithmus neben dem mindestens einen Erntegutparameter des sich im Sichtbereichs 17 des optischen Messsystems 15 befindenden Ernteguts 5 des Erntegutstroms E anhand der mittels der Kamera 16 erfassten Bilddaten des sich im Sichtbereich 17 des Erntegutstroms E befindenden Ernteguts 5 des Erntegutstroms E einen Bedeckungsgrad des Sichtbereichs 17 mit Erntegut 5 ermittelt. FIG. 2 zeigt beispielhaft drei verschiedene Bedeckungsgrade des Sichtbereichs 17 des optischen Messsystems 15, links einen Bedeckungsgrad ohne Erntegutdurchsatz, mittig einen Bedeckungsgrad bei einem geringen Durchsatz von Erntegut 5 und rechts einen Bedeckungsgrad bei einem hohen Durchsatz von Erntegut 5. Der ermittelte Bedeckungsgrad des Sichtbereichs 17 mit Erntegut 5 wird dann von der Kontrollanordnung 14 mit einen vorgebbaren Schwellwert für den Bedeckungsgrad verglichen und bei einem Unterschreiten des Schwellwertes durch den ermittelten Bedeckungsgrad wird der mindestens eine ermittelte Erntegutparameter durch die Kontrollanordnung 14 als ungeeignet klassifiziert. Einhergehend mit der Klassifikation des mindestens einen Erntegutparameters als ungeeignet kann die Kenntlichmachung desselben durch die Kontrollanordnung beispielsweise in der Art erfolgen, dass die Kontrollanordnung 14 den mindestens einen Erntegutparameter mit einem "Flag" versieht oder diesem Erntegutparameter einen Fehlerwert, beispielsweise von "-1", zuweist. Der Bedeckungsgrad kann prozentual definiert sein, sodass ein Bedeckungsgrad von 0% definiert, dass kein Erntegut 5 im Sichtbereich 17 vorhanden ist, und ein Bedeckungsgrad von 100% definiert, dass der Sichtbereich 17 vollständig mit Erntegut 5 bedeckt ist. Alternativ sind auch andere Arten einer Skalierung des Bedeckungsgrades vorstellbar, beispielsweise in Form einer Skala von 0 bis 10, wobei ein Wert von 0 definiert, dass kein Erntegut 5 im Sichtbereich 17 vorhanden ist, und ein Wert von 10 definiert, dass der Sichtbereich 17 vollständig mit Erntegut 5 bedeckt ist.

Mit anderen Worten, mittels der Kamera 16 des optischen Messsystems 15 wird ein Bild von sich im Sichtbereich 17 des optischen Messsystems 15 befindendem Erntegut 5 des Erntegutstroms E generiert. Dieses Bild bzw. die Bilddaten dieses Bildes werden von der Kontrollanordnung 14 in einer Bilderkennungsroutine mittels eines ersten Bilderkennungsalgorithmus derart verarbeitet, dass mindestens ein Erntegutparameter als eine erste Ausgangsgröße der Verarbeitung hervorgeht, und mittels eines zweiten Bildverarbeitungsalgorithmus weiter derart verarbeitet, dass ein Bedeckungsgrad des Sichtbereichs 17 mit Erntegut 5 als zweite Ausgangsgröße der Verarbeitung hervorgeht. Der ermittelte Bedeckungsgrad wird von der Kontrollanordnung 14 mit dem vorgegebenen Schwellwert für den Bedeckungsgrad verglichen. Liegt der ermittelte Bedeckungsgrad unterhalb des Schwellwert wird der anhand des Bildes bzw. der Bilddaten ermittelte mindestens eine Erntegutparameter durch die Kontrollanordnung 14 als ungeeignet klassifiziert.

Sofern die Kontrollanordnung 14 einen anhand von Bilddaten ermittelten Erntegutparameter als ungeeignet klassifiziert hat, wird dieser von der Kontrollanordnung 14 bei der Einstellung eines oder mehrerer Prozessparameter des Feldhäckslers 2 bzw. dessen Arbeitsaggregate 6 vernachlässigt.

Im Einzelnen ermittelt die Kontrollanordnung 14 den Bedeckungsgrad des Sichtbereichs 17, indem die Kontrollanordnung 14 in der Bilderkennungsroutine mittels des zweiten Bilderkennungsalgorithmus eine Gesamtmenge an Bildpixeln in den Bilddaten bestimmt, auf denen Erntegut 5 zu sehen ist. Diese ermittelte Gesamtmenge an Bildpixeln wird durch die Kontrollanordnung 14 mit einer Gesamtmenge an Bildpixeln, die durch den Sichtbereich 17 des optischen Messsystems 15 definiert ist, ins Verhältnis gesetzt. Die Gesamtmenge an Bildpixeln, die durch den Sichtbereich 17 definiert ist, stellt dabei eine konstante Größe dar, die sich somit weder während des Betriebs noch bei einer baugleichen zweiten Kamera 16 ändert. Die Gesamtmenge an Bildpixeln, die durch den Sichtbereich 17 definiert ist, kann wahlweise durch die Kontrollanordnung 14 selbst bestimmbar oder durch die Kontrollanordnung 14 abrufbar hinterlegt sein, beispielsweise in einer Speichereinheit der Kontrollanordnung 14.

Der zweite Bilderkennungsalgorithmus, der von der Kontrollanordnung 14 in der Bilderkennungsroutine für die zur Ermittlung des Bedeckungsgrades des Sichtbereichs 17 des optischen Messsystems 15 mit Erntegut 5 genutzt wird, kann wahlweise auf klassischen Methoden der Bildbearbeitung oder aber auf künstlicher Intelligenz basieren. Die Wahl des zweiten Bilderkennungsalgorithmus kann beispielsweise von der Art des Ernteguts 5 abhängen, das mittels des Feldhäckslers 2 geerntet und verarbeitet wird.

Bei homogenem Erntegut 5, wie beispielsweise Gras oder Weizen, basiert der zweite Bilderkennungsalgorithmus vorzugsweise auf einer klassischen Bildbearbeitungsmethode. So wird beispielsweise zur Ermittlung des Bedeckungsgrades des Sichtbereichs 17 mit Erntegut 5 zunächst ein Farbeschwellwert definiert, bei dem sich das Erntegut 5 klar vom Hintergrund abgrenzt. Ein solcher Farbschwellwert kann dabei wahlweise im RGB-Farbraum, im HSV-Farbraum, im LAB-Farbraum oder aber im YUV-Farbraum definiert werden. Über eine Bildmaske wird dann durch die Kontrollanordnung 14 die Gesamtmenge an Bildpixel bestimmt, auf denen Erntegut 5 zu sehen ist. Die ermittelte Gesamtmenge an Bildpixeln, auf denen Erntegut 5 zu sehen ist, wird anschließend mittels der Kontrollanordnung 14 mit der Gesamtmenge an Bildpixeln, die durch den Sichtbereich 17 definiert ist, ins Verhältnis gesetzt, um den Bedeckungsgrad des Sichtbereichs 17 mit Erntegut 5 zu bestimmen. Ein solches Vorgehen ist in FIG. 3 beispielhaft visualisiert.

Bei heterogenem Erntegut 5, wie beispielsweise Maishäckselgut, beruht der von der Kontrollanordnung 14 in der Bilderkennungsroutine angewandte zweite Bilderkennungsalgorithmus vorzugsweise auf einer künstlichen Intelligenz in Form eines trainierten neuronalen Netzwerks, insbesondere eines Artificial Neural Networks (ANN) oder eines Convolutional Neural Networks (CNN). Dabei wird in der Bilderkennungsroutine das mittels der Kamera 16 ermittelte Bild bzw. die ermittelten Bilder segmentiert, wodurch die Inhalte in den Bilddaten in zusammenhängende Segmente 22 unterteilt werden. Die aus der Segmentierung resultierenden zusammenhängenden Segmente 22 werden dann den Klassen "Erntegut" und "kein Erntegut" zugeordnet. Die Kontrollanordnung 14 bestimmt anhand der Segmentierung eine Gesamtmenge an Bildpixeln, die den Segmenten 22 der Klasse "Erntegut" zugeordnet ist. Diese Gesamtmenge an Bildpixeln entspricht der Gesamtmenge an Bildpixeln in den Bilddaten, auf denen Erntegut 5 zu sehen ist. Anschließend wird mittels der Kontrollanordnung 14 die ermittelte Gesamtmenge an Bildpixeln, auf denen Erntegut 5 zu sehen ist, mit der Gesamtmenge an Bildpixeln, die durch den Sichtbereich 17 definiert ist, ins Verhältnis gesetzt, um den Bedeckungsgrad des Sichtbereichs 17 mit Erntegut 5 zu bestimmen. Ein solches Vorgehen ist in FIG. 4 beispielhaft visualisiert.

Es versteht sich, dass auch bei homogenem Erntegut 5 ein Einsatz einer künstlichen Intelligenz möglich ist, gleichermaßen ist bei heterogenem Erntegut 5 an und für sich auch ein Einsatz von klassischen Bildbearbeitungsmethoden vorstellbar.

Neben den zuvor beschriebenen Arbeitsaggregaten 6 und der Kontrollanordnung 14 mit dem optischen Messsystem 15 kann der Feldhäcksler 2 eine - in den FIG. 1 schematisch dargestellte - Sensoreinrichtung 23 zur Bestimmung des Erntegutdurchsatzes aufweisen. Die Sensoreinrichtung 23 steht mit der Kontrollanordnung 14 in datenübertragender Weise in Verbindung. Die Kontrollanordnung 14 ist dazu eingerichtet, einen mittels der Sensoreinrichtung 23 ermittelten Erntegutdurchsatz mit dem anhand der Bilddaten bestimmten Bedeckungsgrad zu korrelieren, um somit die Klassifikation des mindestens einen Erntegutparameters anhand des Erntegutdurchsatzes zu überprüfen. Wird beispielsweise ein Bedeckungsgrad des Sichtbereichs 17 durch die Kontrollanordnung 14 ermittelt, der oberhalb des vorgegebenen Schwellwerts für den Bedeckungsgrad liegt, der Erntegutparameter somit von der Kontrollanordnung 14 als valide klassifiziert wird, kann zur Kontrolle auch der Erntegutdurchsatz herangezogen werden, welcher in einem solchen Fall hoch sein sollte. Sollte der mittels der Sensoreinrichtung 23 gemessene Erntegutdurchsatz in diesem Fall hingegen niedrig sein, so könnte der Erntegutparameter trotz des positiven Ergebnisses einer Klassifikation über den Bedeckungsgrad trotz alledem anhand des ermittelten Erntegutdurchsatzes als ungeeignet klassifiziert werden.

Die Kontrollanordnung 14 kann weiterhin mit einer Eingabeeinheit 24 in datenübertragender Weise in Verbindung stehen, mittels welcher der Schwellwert für den Bedeckungsgrad durch einen Bediener 25 des Feldhäckslers 2 vorgegeben werden kann. Der Bediener 25 kann beispielsweise als Schwellwert für den Bedeckungsgrad des Sichtbereichs 17 des optischen Messsystems 15 einen Wert von 80% angeben bzw. diesen aus einer Auswahl an möglichen Schwellwerten auswählen, wodurch alle anhand von Bilddaten durch die Kontrollanordnung 14 ermittelten Erntegutparameter, bei denen ein Bedeckungsgrad des Sichtbereichs 17 mit Erntegut 5 von weniger als 80% bestimmt wurde, von der Kontrollanordnung als ungeeignet klassifiziert würden. Der Wert von 80% ist hier lediglich beispielhaft zu verstehen. Der Schwellwert kann von dem Bediener 25 flexibel zwischen 0% und 100% vorgegeben werden. Bei einer anderen verwendeten Skalierung, beispielsweise einer Skala von 1 bis 10, kann der Schwellwert für den Bedeckungsgrad vom Bediener 25 flexibel in der entsprechenden Skala, beispielsweise zwischen 1 und 10, vorgegeben werden. Die Eingabeeinheit 24 kann Teil des Feldhäckslers 2, beispielsweise einer übergeordneten Benutzerschnittstelle 26 in der Fahrerkabine des Feldhäckslers 2, und/oder eine vom Feldhäcksler 2 unabhängige Eingabeeinheit 24 sein, beispielsweise eine Eingabeeinheit 24, welche Bestandteil eines mobilen Endgeräts, vorzugsweise eines Smartphones oder Tablets, ist, das vom Bediener 25 mitgeführt wird.

Alternativ zur Vorgabe des Schwellwerts für den Bedeckungsgrad durch den Bediener 25 ist unter vorgebbar auch zu verstehen, dass ein oder auch mehrere Schwellwerte durch die Kontrollanordnung 14 abrufbar hinterlegt sind, beispielsweise in einer Speichereinheit der Kontrollanordnung 14, wobei die Kontrollanordnung 14 abhängig beispielsweise vom Feldbestand 4 und somit vom Erntegut 5 und/oder abhängig von anderen ermittelten Randbedingungen im Betrieb selbsttätig einen für die vorliegenden Bedingungen geeigneten Schwellwert für die Klassifikation des mindestens einen Erntegutparameters heranzieht.

Neben der Eingabeeinheit 24 kann die Kontrollanordnung 14 ferner mit einer Anzeigeeinheit 27 in datenübertragender Weise in Verbindung stehen, mittels welcher die Klassifikation des mindestens einen Erntegutparameters, also als ungeeignet oder als valide, visualisierbar ist. Neben der Klassifikation des mindestens einen Erntegutparameters können weitere Informationen und/oder Parameter mittels der Anzeigeeinheit 27 dem Bediener 25 visualisiert werden, beispielsweise die Art von Erntegut 5, die von dem Feldhäcksler 2 geerntet und verarbeitet wird, der ermittelte Bedeckungsgrad des Sichtbereichs 17 mit Erntegut 5 oder dergleichen. Auch die Anzeigeeinheit 27 kann Teil des Feldhäckslers 2, beispielsweise der übergeordneten Benutzerschnittstelle 26 in der Fahrerkabine des Feldhäckslers 2, und/oder eine vom Feldhäcksler 2 unabhängige Anzeigeeinheit 27 sein, beispielsweise eine Anzeigeeinheit 27, welche Bestandteil eines mobilen Endgeräts, vorzugsweise eines Smartphones oder Tablets, ist, das vom Bediener 25 mitgeführt wird.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliche Erntemaschine
- 2: Feldhäcksler
- 3: Feld
- 4: Feldbestand
- 5: Erntegut
- 6: Arbeitsaggregat
- 7: Antriebsmotor
- 8: Ernteguttransportweg
- 9: Vorsatzgerät
- 10: Häckselwerk
- 11: Corncracker
- 12: Auswurfbeschleuniger
- 13: Überladeeinrichtung
- 14: Kontrollanordnung
- 15: Optisches Messsystem
- 16: Kamera
- 17: Sichtbereich
- 18: Spiegel
- 19: Linse
- 20: Lichtquelle
- 21: Sichtfenster
- 22: Segmente
- 23: Sensoreinrichtung
- 24: Eingabeeinheit
- 25: Bediener
- 26: Benutzerschnittstelle
- 27: Anzeigeeinheit
- E: Erntegutstrom

## Patentansprüche

1. Landwirtschaftliche Erntemaschine (1), insbesondere Feldhäcksler (2), mit mindestens einem Arbeitsaggregat (6) zum Abernten eines Feldbestandes (4) und/oder zur Verarbeitung von Erntegut (5) des Feldbestandes (4), wobei das Erntegut (5) im Betrieb der landwirtschaftlichen Erntemaschine (1) in einem Erntegutstrom (E) entlang eines Ernteguttransportweges (8) durch die landwirtschaftliche Erntemaschine (1) transportiert wird, wobei die landwirtschaftliche Erntemaschine (1) eine Kontrollanordnung (14) aufweist, die ein an dem Ernteguttransportweg (8) angeordnetes optisches Messsystem (15) aufweist, wobei das optische Messsystem (15) mindestens eine Kamera (16) zur Aufnahme von Bilddaten von sich in einem Sichtbereich (17) des optischen Messsystems (15) befindendem Erntegut (5) des Erntegutstroms (E) aufweist, wobei das optische Messsystem (15) dazu eingerichtet ist, in einer Messroutine mittels der Kamera (16) Bilddaten des sich im Sichtbereich (17) befindenden Ernteguts (5) zu erfassen, wobei die Kontrollanordnung (14) dazu eingerichtet ist, in einer Bilderkennungsroutine mittels eines ersten Bilderkennungsalgorithmus anhand der Bilddaten mindestens einen Erntegutparameter des Ernteguts (5) zu ermitteln, **dadurch gekennzeichnet, dass** die Kontrollanordnung (14) dazu eingerichtet ist, in der Bilderkennungsroutine mittels eines zweiten Bilderkennungsalgorithmus neben dem mindestens einen Erntegutparameter anhand der Bilddaten einen Bedeckungsgrad des Sichtbereichs (17) mit Erntegut (5) zu ermitteln, den ermittelten Bedeckungsgrad mit einem vorgebbaren Schwellwert für den Bedeckungsgrad zu vergleichen und bei einem Unterschreiten des definierten Schwellwerts den mindestens einen ermittelten Erntegutparameter als ungeeignet zu klassifizieren.

2. Landwirtschaftliche Erntemaschine (1) nach Anspruch 1, **dadurch gekennzeichnet, dass** die Kontrollanordnung (14) zur Ermittlung des Bedeckungsgrades des Sichtbereichs (17) mit Erntegut (5) dazu eingerichtet ist, in der Bilderkennungsroutine mittels des zweiten Bilderkennungsalgorithmus eine Gesamtmenge an Bildpixeln in den Bilddaten zu bestimmen, auf denen Erntegut (5) zu sehen ist, und diese Gesamtmenge an Bildpixeln mit einer Gesamtmenge an Bildpixeln, die durch den Sichtbereich (17) definiert ist, ins Verhältnis zu setzen, wobei die Gesamtmenge an Bildpixeln, die durch den Sichtbereich (17) definiert ist, durch die Kontrollanordnung (14) bestimmbar oder abrufbar hinterlegt ist.

3. Landwirtschaftliche Erntemaschine (1) nach Anspruch 1 oder 2, **dadurch gekennzeichnet, dass** der zweite Bilderkennungsalgorithmus auf künstlicher Intelligenz basiert, vorzugsweise ein trainiertes neuronales Netzwerk nutzt, besonders bevorzugt ein Artificial Neural Network (ANN) oder ein Convolutional Neural Network (CNN).

4. Landwirtschaftliche Erntemaschine (1) nach einem der Ansprüche 1 bis 3, **dadurch gekennzeichnet, dass** die Kontrollanordnung (14) dazu eingerichtet ist, eine Segmentierung der Bilddaten vorzunehmen, mittels der in den Bilddaten enthaltene Inhalte in zusammenhängende Segmente (22) unterteilt werden.

5. Landwirtschaftliche Erntemaschine (1) nach Anspruch 4, **dadurch gekennzeichnet, dass** die Kontrollanordnung (14) dazu eingerichtet ist, die Bilddaten semantisch zu segmentieren und zusammenhängende Segmente (22) entweder der Klasse "Erntegut" oder der Klasse "kein Erntegut" zuzuordnen.

6. Landwirtschaftliche Erntemaschine (1) nach Anspruch 5, **dadurch gekennzeichnet, dass** die Kontrollanordnung (14) dazu eingerichtet ist, eine Gesamtmenge an Bildpixeln zu bestimmen, die den Segmenten (22) der Klasse "Erntegut" zugeordnet ist, wobei die Gesamtmenge an Bildpixeln, die den Segmenten (22) der Klasse "Erntegut" zugeordnet ist, der Gesamtmenge an Bildpixeln in den Bilddaten entspricht, auf denen Erntegut (5) zu sehen ist.

7. Landwirtschaftliche Erntemaschine (1) nach einem der Ansprüche 1 bis 6, **dadurch gekennzeichnet, dass** die Kontrollanordnung (14) dazu eingerichtet ist, basierend auf dem mindestens einen ermittelten Erntegutparameter mindestens einen Prozessparameter der landwirtschaftlichen Erntemaschine (1), insbesondere mindestens eines Arbeitsaggregats (6) der landwirtschaftlichen Erntemaschine (1), vorzugsweise automatisiert, einzustellen, wobei die Kontrollanordnung (14) dazu eingerichtet ist, einen als ungeeignet klassifizierten Erntegutparameter bei der Einstellung des mindestens einen Prozessparameters zu vernachlässigen.

8. Landwirtschaftliche Erntemaschine (1) nach einem der Ansprüche 1 bis 7, **dadurch gekennzeichnet, dass** die landwirtschaftliche Erntemaschine (1) eine Sensoreinrichtung (23) zur Bestimmung eines Erntegutdurchsatzes aufweist, wobei die Sensoreinrichtung (23) mit der Kontrollanordnung (14) in datenübertragender Weise in Verbindung steht, wobei die Kontrollanordnung (14) dazu eingerichtet ist, einen bestimmten Erntegutdurchsatz mit dem bestimmten Bedeckungsgrad zu korrelieren und die Klassifikation des mindestens einen Erntegutparameters anhand des Erntegutdurchsatzes zu überprüfen.

9. Landwirtschaftliche Erntemaschine (1) nach einem der Ansprüche 1 bis 8, **dadurch gekennzeichnet, dass** die mindestens eine Kamera (16) eine Multispektralkamera, eine Hyperspektralkamera, eine sichtbares Licht aufnehmende Kamera und/oder eine infrarotes Licht aufnehmende Kamera ist.

10. Landwirtschaftliche Erntemaschine (1) nach einem der Anspräche 1 bis 9, **dadurch gekennzeichnet, dass** die mindestens eine Kamera (16) an einer Überladeeinrichtung (13) der landwirtschaftlichen Erntemaschine (1), vorzugsweise an einer als Auswurfkrümmer ausgeführten Überladeeinrichtung (13) des Feldhäckslers (2), angeordnet ist.

11. Landwirtschaftliche Erntemaschine (1) nach einem der Ansprüche 1 bis 10, **dadurch gekennzeichnet, dass** die Kontrollanordnung (14) mit einer Eingabeeinheit (24) in datenübertragender Weise in Verbindung steht, mittels welcher der Schwellwert für den Bedeckungsgrad vorgebbar ist.

12. Landwirtschaftliche Erntemaschine (1) nach einem der Ansprüche 1 bis 11, **dadurch gekennzeichnet, dass** die Kontrollanordnung (14) mit einer Anzeigeeinheit (27) in datenübertragender Weise in Verbindung steht, mittels welcher zumindest die Klassifikation des mindestens einen Erntegutparameters visualisierbar ist.
